# FASCICULE DE BREVET EUROPEEN

(11) **EP 1 918 511 B1**
(45) Date de publication et mention de la délivrance du brevet: **06.07.2011**
(21) Numéro de dépôt: 07118971.6
(22) Date de dépôt: 22.10.2007
(51) Int. Cl.: F01D 5/02

(54) **Systeme d'equilibrage pour rotor de turbomachine**
Ausgleichssystem für einen Strömungsmaschinenrotor
Balancing system for a turbomachine rotor

(30) Priorité: 24.10.2006 FR 0654491
(43) Date de publication de la demande: 07.05.2008
(73) Titulaire: SNECMA, 75015 Paris (FR)
(72) Inventeur: Blanchard, Stéphane, Pierre, Guillaume, 77590, Chartrettes (FR); Garin, Fabrice, 91330, Yerres (FR); Judet, Maurice, Guy, 77190, Dammarie les Lys (FR); Langevin, Thomas, 77190, Dammarie les Lys (FR)
(74) Mandataire: Ilgart, Jean-Christophe

(56) Documents cités:
- US-A- 4 879 792

## Description

### DOMAINE TECHNIQUE

La présente invention se rapporte de façon générale à un système d'équilibrage de rotor de turbomachine, ainsi qu'à un module de turbomachine comportant au moins un tel système d'équilibrage.

Un tel système d'équilibrage est par exemple connu du document US 4 879 792.

L'invention concerne également une turbomachine équipée d'au moins un tel module, la turbomachine prenant de préférence la forme d'un turboréacteur pour aéronef.

### ETAT DE LA TECHNIQUE ANTERIEURE

Sur les modules de turbomachine existants, tels que des compresseurs ou des turbines, il est habituellement prévu un système d'équilibrage de rotor comprenant une bride annulaire d'équilibrage sur laquelle sont montées des masses d'équilibrage, à l'aide de boulons logés dans des passages traversants de la bride annulaire. Les masses peuvent ainsi être réparties autour de la bride de la façon souhaitée, assurant un bon équilibrage du module de turbomachine associé. De ce fait, ce type de système d'équilibrage de rotor est généralement qualifié de modulaire.

Plus précisément, la bride annulaire d'équilibrage comprend habituellement une âme annulaire délimitée radialement dans un premier sens par une zone de jonction à partir de laquelle s'étend radialement dans ce premier sens une pluralité de passages traversants, vers une extrémité radiale libre de bride, chaque passage traversant présentant un sommet radial, selon un second sens opposé au premier sens, appartenant à ladite zone de jonction. Généralement, le premier sens est celui allant radialement vers l'intérieur, et le second sens opposé est celui allant radialement vers l'extérieur.

En outre, le système comprend donc une pluralité de masses d'équilibrage montées fixement sur la bride annulaire d'équilibrage par l'intermédiaire d'au moins un assemblage vis/écrou traversant l'un des passages, la tête de vis étant en appui contre une première face de la bride annulaire d'équilibrage et la masse d'équilibrage étant en appui contre une seconde face de la bride annulaire d'équilibrage, opposée à la première face.

Lors d'études réalisées dans le cadre de la détermination des contraintes subies par la bride d'équilibrage, il a été remarqué que les plus fortes contraintes tangentielles étaient localisées au niveau du sommet radial de chaque passage traversant, donc sur et à proximité de la zone de jonction précitée. A titre indicatif, il est précisé que les contraintes tangentielles sont essentiellement liées aux effets centrifuge et thermique.

De plus, il est noté que les portions de la bride d'équilibrage fortement sollicitées tangentiellement sont également contraintes axialement par le serrage de l'assemblage vis/écrou. Ainsi, la combinaison de ces contraintes tangentielles et axiales peut conduire à une durée de vie trop faible de la bride d'équilibrage, et engendre par ailleurs des risques importants de détérioration de cette bride.

### EXPOSÉ DE L'INVENTION

L'invention a donc pour but de proposer un système d'équilibrage de rotor de turbomachine ainsi qu'un module de turbomachine remédiant aux inconvénients mentionnés ci-dessus, relatifs aux réalisations de l'art antérieur.

Pour ce faire, l'invention a tout d'abord pour objet un système d'équilibrage de rotor de turbomachine comprenant une bride annulaire d'équilibrage pourvue d'une âme annulaire délimitée radialement dans un premier sens par une zone de jonction à partir de laquelle s'étend radialement dans le premier sens une pluralité de passages traversants, vers une extrémité radiale libre de bride, chaque passage traversant présentant un sommet radial, selon un second sens opposé au premier sens, appartenant à la zone de jonction, le système comprenant en outre une pluralité de masses d'équilibrage montées fixement sur la bride annulaire d'équilibrage par l'intermédiaire d'au moins un assemblage vis/écrou traversant l'un des passages, l'un des éléments pris parmi l'écrou et la tête de vis étant en appui contre une première face de la bride annulaire d'équilibrage et la masse d'équilibrage étant en appui contre une seconde face de la bride annulaire d'équilibrage, opposée à la première face.

Selon l'invention, pour chacun des passages traversants, la bride annulaire d'équilibrage présente sur sa première face un premier évidement passant par le sommet radial et s'étendant de part et d'autre de la zone de jonction, ce premier évidement étant dépourvu de contact avec l'élément pris parmi l'écrou et la tête de vis, la bride d'équilibrage présentant sur sa seconde face un second évidement passant par le sommet radial et s'étendant de part et d'autre de la zone de jonction, ce second évidement étant dépourvu de contact avec la masse d'équilibrage.

Ainsi, l'invention propose une solution astucieuse permettant de déporter les contraintes axiales issues du serrage de l'assemblage vis/écrou hors de la zone de la bride annulaire d'équilibrage fortement sollicitée par ailleurs par les contraintes tangentielles, cette zone étant, comme mentionné ci-dessus, centrée sur le sommet radial du passage traversant concerné.

En effet, les évidements prévus sont donc réalisés de manière à déboucher jusque dans les passages traversants associés, en réalisant ces évidements de part et d'autre de ladite zone de jonction, à savoir conjointement sur l'âme annulaire de la bride et sur une portion dite percée, également annulaire et intégrant les différents passages traversants. De cette façon, pour chacun des passages traversants, ledit élément pris parmi l'écrou et la tête de vis n'est plus en appui contre le sommet radial duquel il est éloigné d'une distance égale à la profondeur du premier évidement, ce qui permet de n'engendrer quasiment aucune contrainte axiale sur ce sommet fortement sollicité tangentiellement par les effets centrifuge et thermique.

En conséquence, le découplage des contraintes tangentielles et axiales opéré dans la présente invention conduit avantageusement à augmenter la durée de vie des brides d'équilibrage, et limite également grandement les risques de détérioration de celles-ci.

Il est indiqué que l'invention prévoit que chaque évidement se situe autour du passage traversant associé, sur et à proximité du sommet radial. Naturellement, l'évidement concerné, également assimilable à une échancrure ou un détalonnage, pourrait s'étendre de façon plus importante autour du passage, voire tout autour de ce dernier, sans sortir du cadre de l'invention.

Enfin, la bride annulaire d'équilibrage peut indifféremment être prévue pour être rapportée fixement sur un disque de rotor, en particulier sur sa portion radiale interne élargie de définition d'alésage, également dénommée moyeux du disque ou « poireau », ou bien pour être confondu avec un bride de liaison quelconque faisant partie intégrante du module de turbomachine associé.

De préférence, en section transversale de la bride passant par les passages traversants, la zone de jonction prend la forme d'un cercle centré sur un axe de la bride annulaire.

De plus, toujours en section transversale de la bride annulaire passant par les passages traversants, le sommet radial de chaque passage traversant prend de préférence la forme d'un point appartenant au cercle centré sur l'axe de la bride annulaire.

Préférentiellement, les premiers évidements sont constitués par une unique rainure circulaire pratiquée sur la première face, de façon centrée sur l'axe de la bride annulaire, et les seconds évidements sont constitués par une unique rainure circulaire pratiquée sur la seconde face, également de façon centrée sur l'axe de la bride annulaire. Cette solution est avantageuse dans le sens où elle permet à l'aide d'une simple et unique opération d'usinage de l'une des faces de la bride annulaire d'équilibrage, d'obtenir la totalité des évidements de cette face.

Toujours de manière préférentielle, chaque masse d'équilibrage est assemblée sur la bride d'équilibrage par l'intermédiaire de deux assemblages vis/écrou traversant respectivement deux des passages directement consécutifs.

De plus, on prévoit de préférence pour chaque passage traversant, que la tête de vis est en appui contre la première face de la bride d'équilibrage, l'écrou étant alors en appui contre la masse d'équilibrage. Naturellement, il serait possible de prévoir une situation inverse dans laquelle l'écrou est en appui contre la première face de la bride d'équilibrage et la tête de vis en appui contre la masse d'équilibrage, sans sortir du cadre de l'invention.

Enfin, chaque passage traversant prend la forme d'un feston ou d'un trou. A titre indicatif, le feston est classiquement ouvert radialement dans le premier sens, à savoir débouchant au niveau de ladite extrémité radiale libre de bride, tandis que le trou présente quant à lui une section fermée.

L'invention a également pour objet un disque de rotor de turbomachine comprenant un système d'équilibrage tel que décrit ci-dessus, avec ladite bride d'équilibrage portée par un moyeu dudit disque, avec lequel elle peut être réalisée d'une seule pièce.

D'autre part, l'invention a également pour objet un module de turbomachine comprenant au moins un système d'équilibrage de rotor tel que présenté ci-dessus.

De préférence, le module est une turbine ou un compresseur de turbomachine, haute pression ou basse pression.

Enfin, l'invention a pour autre objet une turbomachine tel qu'un turboréacteur d'aéronef, comprenant au moins un module tel que décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle de côté d'un module de turbomachine selon un mode de réalisation préféré de la présente invention ;
- la figure 2 montre une vue partielle en perspective de la bride annulaire d'équilibrage destinée faire partie intégrante du système d'équilibrage de rotor appartenant au module de turbomachine montré sur la figure 1 ;
- la figure 3 montre une vue en coupe selon la ligne III-III de la figure 2, sur laquelle ont été rajoutés une masse d'équilibrage et ses moyens d'assemblage associés ;
- la figure 4 montre une vue en coupe selon la ligne IV-IV de la figure 3 ; et
- la figure 5 montre une vue partielle en coupe selon la ligne V-V de la figure 1.

### EXPOSÉ DÉTAILLÉ DE MODES DE RÉALISATION PRÉFÉRÉS

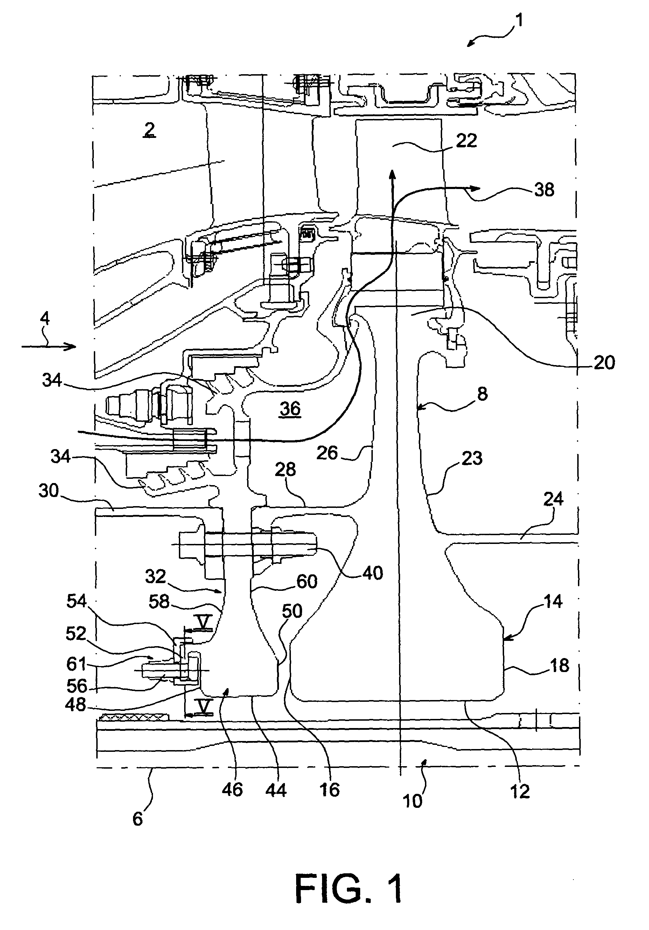

En référence à la figure 1, on voit une partie d'un module 1 de turbomachine selon un mode de réalisation préféré de la présente invention, ce module étant ici une turbine haute pression dite turbine HP de la turbomachine, prenant quant à elle la forme d'un turboréacteur pour aéronef.

Sur la figure 1, on peut apercevoir la partie rotor de la turbine HP, située en aval d'une chambre de combustion 2 du turboréacteur. A cet égard, il est noté que les notions « aval » et « amont » employées ci-après sont à considérer par rapport à une direction principale d'écoulement des gaz à travers la turbomachine, référencée schématiquement par la flèche 4, cette direction étant sensiblement parallèle à un axe longitudinal 6 du turboréacteur correspondant simultanément à un axe du module 1 et des disques le composant.

En effet, le module 1 comporte un disque principal de rotor dénommé disque de support d'aubes 8, d'axe 6, traversant un système d'axes 10 du turboréacteur grâce à la présence d'un alésage 12. Plus précisément, cet alésage 12 est réalisé de façon connue au niveau d'une portion radiale interne élargie 14, constituant la portion la plus épaisse du disque 8, et délimitée par une face amont 16 et une face aval 18 toutes deux orthogonales à l'axe 6. La portion radiale interne élargie 14 formant moyeux du disque, également dénommée « poireau », présente donc une épaisseur sensiblement constante selon la direction de l'axe 6, qui est égale à la longueur de l'alésage 12 dans cette même direction.

Au niveau d'une portion d'extrémité radiale externe 20 du disque 8, se trouvent montées des aubes de turbine 22 à travers lesquelles les gaz s'échappant de la chambre de combustion 2 peuvent se détendre.

Sur le flanc aval 23 du disque de support d'aubes 8 est agencée une bride annulaire de liaison 24 servant à la fixation de ce disque 8 sur une partie aval du module, non représentée. Comme visible sur la figure 1, la bride annulaire de liaison aval 24 fait saillie à partir du flanc aval 23 avec lequel elle est réalisée d'un seul tenant, au niveau d'une partie située au-dessus de la portion radiale interne élargie 14.

D'autre part, sur le flanc amont 26 du disque de support d'aubes 8 est agencée une autre bride annulaire de liaison 28 servant à la fixation de ce disque 8 sur un autre module de turbomachine, et plus spécifiquement sur le compresseur haute pression, dit compresseur HP (non représenté), comprenant quant à lui une bride annulaire de liaison aval 30. Ici encore, comme visible sur la figure 1, la bride annulaire de liaison amont 28 fait saillie à partir du flanc amont 26 avec lequel elle est réalisée d'un seul tenant, au niveau d'une partie située au-dessus de la portion radiale interne élargie 14.

De plus, outre la fonction d'assemblage avec le compresseur HP, cette bride annulaire de liaison amont 28 sert également au montage d'un disque labyrinthe 32 situé en amont du disque de support d'aubes 8, dont la fonction principale connue de l'homme du métier réside dans l'aide au refroidissement de ce disque 8 et des aubes qu'il porte. En effet, le disque 32, comportant un ou plusieurs dispositifs annulaires d'étanchéité du type labyrinthe 34 tangentant le stator du module, permet de définir un espace annulaire de refroidissement 36 vers l'aval, entre lui-même et le disque 8 à refroidir. Ainsi, l'air frais pénétrant au sein de cet espace 36 vient épouser le flanc amont 26 du disque 8, avant de rejoindre radialement vers l'extérieur un circuit d'air à travers les aubes 22, comme montré schématiquement par la flèche 38 de la figure 1.

Dans ce mode de réalisation préféré de la présente invention, le disque labyrinthe 32 est agencé entre les deux brides annulaires de liaison 28, 30, sur lesquelles il est monté fixement à l'aide de boulons 40 servant à l'assemblage des deux brides, et répartis tout autour de l'axe 6.

Le disque labyrinthe 32 traverse également le système d'axes 10 du turboréacteur, grâce à la présence d'un alésage 44. Plus précisément, cet alésage 44 est réalisé de façon connue au niveau d'une portion radiale interne élargie 46, constituant la portion la plus épaisse du disque 32 et délimitée par une face amont 48 et une face aval 50 toutes deux orthogonales à l'axe 6. La portion radiale interne élargie 46 ou moyeux du disque, également dénommée « poireau », présente donc une épaisseur sensiblement constante selon la direction de l'axe 6, qui est égale à la longueur de l'alésage 44 dans cette même direction. A cet égard, de manière connue de l'homme du métier et comme représenté sur les figures, le disque présente, radialement de l'intérieur vers l'extérieur, le moyeux 46, un voile ou flasque, et enfin une couronne conformée en fonction des besoins rencontrés.

Dans ce mode de réalisation préféré, il est agencé une bride annulaire d'équilibrage 52, équipée de masses d'équilibrage 54, sur la portion radiale interne élargie ou moyeux 46. Plus précisément, cette bride annulaire d'équilibrage 52 est réalisée d'un seul tenant avec la portion radiale interne élargie 46 de laquelle elle fait saillie vers l'amont puis radialement vers l'intérieur, à partir de la face 48. D'une façon générale, la bride 52 et les masses 54 y étant rapportées de façon déterminée forment ensemble un système d'équilibrage de rotor de turbomachine 61.

Etant donné que cette bride d'équilibrage 52 est distincte des brides de liaison indiquées ci-dessus, les masses d'équilibrage 54 peuvent alors être montées de façon définitive sur cette bride 52, antérieurement à l'opération de jonction du module 1 avec un autre module de turbomachine. Le fabriquant d'un tel module 1 de turbomachine est par conséquent capable de garantir un montage satisfaisant du système d'équilibrage, en particulier des masses 54 sur la bride 52 à l'aide de boulons 56, car l'assemblage ultérieur de ce même module 1 avec un autre module de turbomachine, en l'occurrence le compresseur HP, ne nécessite pas de démontage/montage des masses d'équilibrage déjà installées sur la bride 52 prévue à cet effet.

Comme visible sur la figure 1, on peut faire en sorte que la bride d'équilibrage 52 fasse saillie de la face 48 vers l'amont au niveau de l'extrémité radiale externe de celle-ci, à savoir au niveau de l'intersection de cette face 48 orthogonale à l'axe 6 avec le reste d'un flanc amont 58 de ce disque 32, opposé à un flanc aval 60 délimitant l'espace de refroidissement 36. Il est par ailleurs noté que les flancs 58 et 60 sont agencés au niveau du voile ou flasque du disque 32.

Par conséquent, il doit être compris que la bride d'équilibrage 52 est dépourvue de fonction de liaison avec un autre élément de la turbomachine, que ce soit d'un élément du même module 1 ou d'un module adjacent de la turbomachine, ce qui implique que sa fonction réside uniquement dans le support des masses d'équilibrage 54. Ainsi, aucun élément de la turbomachine autre que les masses d'équilibrage 54 n'est fixé sur cette bride annulaire d'équilibrage 52, qui, comme visible sur la figure 1, est disposée radialement intérieurement par rapport aux brides annulaires de liaison 28, 30 précitées servant au raccordement de la turbine HP sur le compresseur HP, ainsi qu'au support du disque labyrinthe 32.

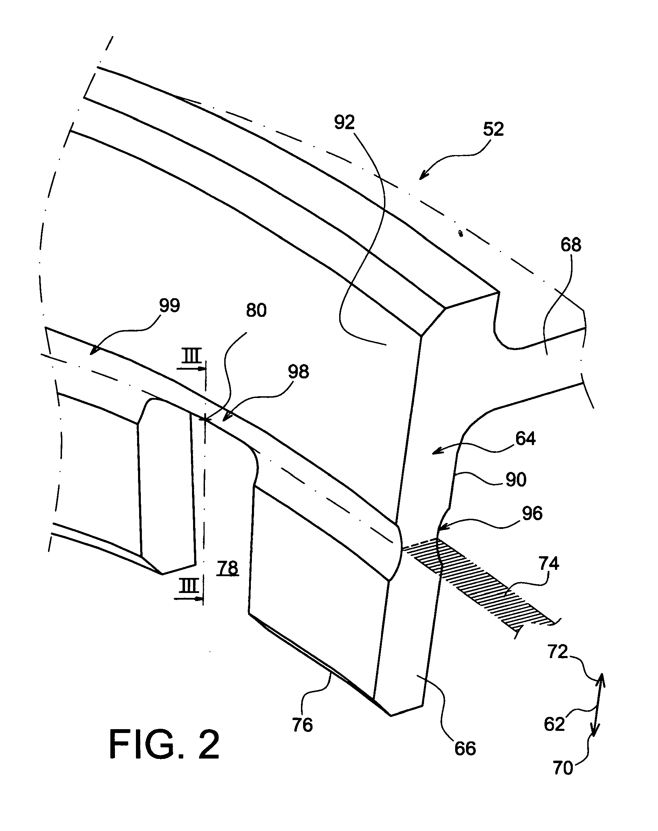

En référence à présent aux figures 2 à 4, on peut voir l'une des particularités de la présente invention, résidant dans la conception particulière de la bride annulaire d'équilibrage 52, d'axe 6, également dénommé axe de la bride annulaire.

La bride annulaire d'équilibrage 52 comprend essentiellement deux portions jointives et décalées selon une direction radiale 62 de la bride, à savoir une âme annulaire 64 constituant la partie radiale externe de cette bride, et une portion percée 66 constituant la partie radiale interne de cette dernière. L'âme 64, ou portion principale de la bride 52, est pleine et intègre une portion annulaire de liaison 68 assurant le raccordement de la bride sur la face 48 de la portion radiale interne élargie 46 du disque 32.

L'âme 64 s'étend donc dans la direction radiale 62 suivant un premier sens 70 correspondant au sens allant vers l'intérieur, jusqu'à une zone dite de jonction schématisée par les pointillés 74 et séparant cette âme 64 de la portion percée 66, la zone de jonction 74 prenant de préférence la forme d'un cylindre fictif de section circulaire centré sur l'axe 6. A noter que le second sens 72 associé à la direction radiale 62 et montré sur les figures correspond à celui allant vers l'extérieur.

La portion percée annulaire 66 s'étend donc radialement à partir de la zone de jonction 74, dans le premier sens 70, jusqu'à une extrémité radiale libre de bride 76. Cette portion 66 intègre donc des passages traversants 78 qui s'étendent chacun radialement à partir de la zone de jonction 74, dans le premier sens 70 vers l'extrémité radiale libre de bride 76. Ici, les passages 78 prennent la forme de festons, à savoir qu'ils s'étendent radialement sur toute la portion percée annulaire 66, puisqu'ils débouchent radialement vers l'intérieur au niveau de l'extrémité radiale libre de bride 76. En d'autres termes, ils présentent chacun un contour ouvert, contrairement à un trou présentant un contour fermé. A ce titre, les passages 78 pourraient alternativement prendre la forme de trou, sans sortir du cadre de la présente invention.

De plus, il est indiqué que chaque passage traversant 78 présente un sommet radial 80 selon le second sens 72, sommet qui appartient à la zone de jonction 74 précitée.

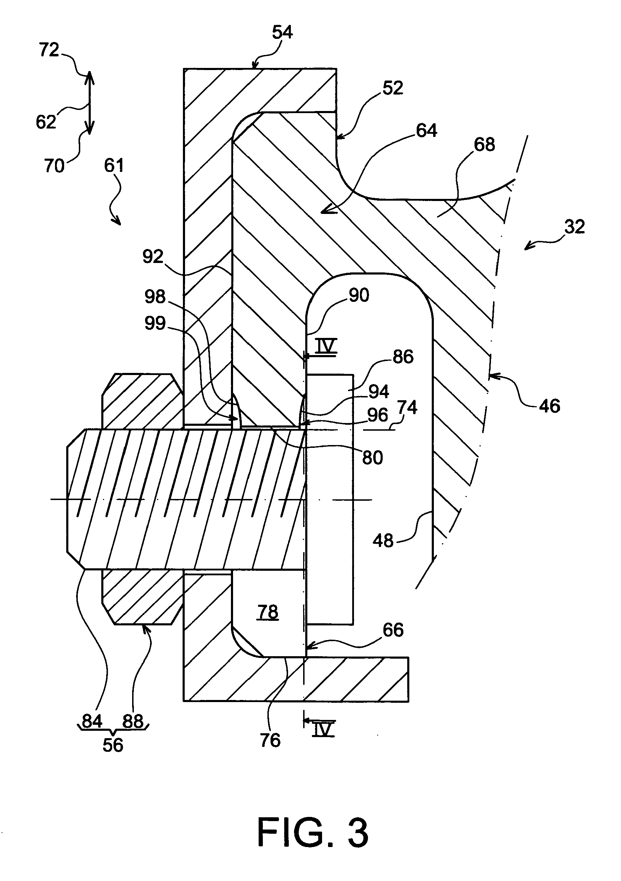

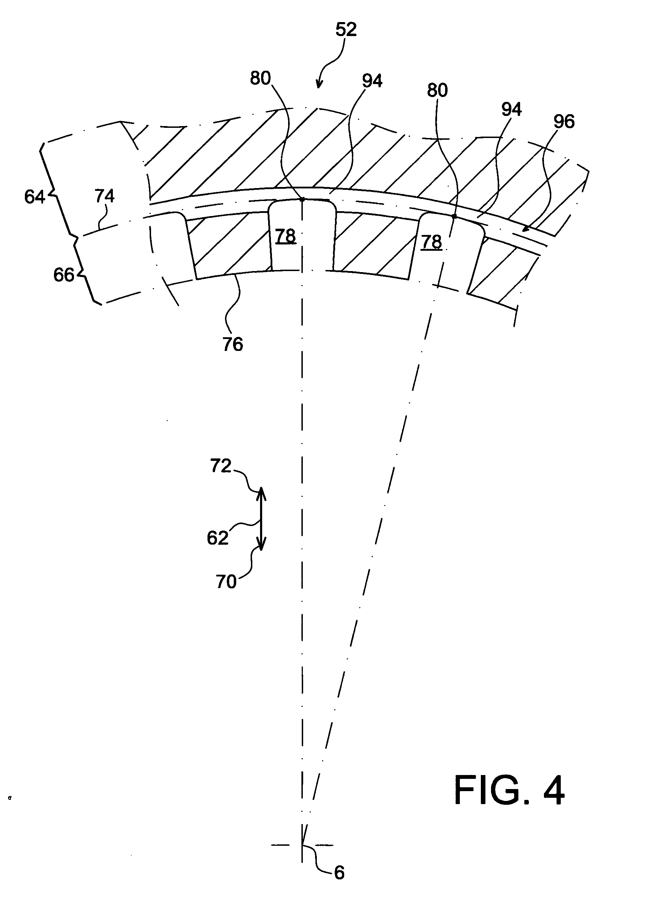

Plus précisément en référence à la figure 4, on peut apercevoir que les passages 78 servant à la traversée des boulons 56 disposent tous d'une forme et de dimensions sensiblement identiques, de sorte qu'en section transversale de la bride passant par ces passages traversants 78, ou encore dans la vue en coupe transversale de cette figure 4, la zone de jonction 74 prend la forme d'un cercle centré sur l'axe 6. De plus, on peut voir que le sommet radial 80 de chaque passage traversant 78 prend la forme d'un point appartenant au cercle 74, étant donné que le fond de chacun des festons 78 dispose préférentiellement d'une légère courbure orientée radialement vers l'intérieur, selon le premier sens 70. A cet égard, il est précisé comme cela est montré sur la figure 3 assimilable à une coupe diamétrale ou radiale, que ce sommet radial 80 prend dans cette coupe la forme d'un segment de droite préférentiellement parallèle à l'axe 6 (non représenté) et s'étendant sur toute la longueur du passage 78 selon la direction de ce même axe. En outre, ce même segment de droite 80 appartient entièrement à la zone de jonction 74.

La figure 3 montre que les masses d'équilibrage 54 (une seule visible sur la figure 3) sont montées fixement sur la bride d'équilibrage 52 par l'intermédiaire d'un ou plusieurs assemblages vis/écrou 56 traversant chacun l'un des passages 78, chaque masse 54 étant préférentiellement rapportée sur la bride 52 à l'aide de deux assemblages vis/écrou 56 traversant respectivement deux passages 78 directement consécutifs dans la direction tangentielle de la bride 52, tel que cela sera détaillé ultérieurement.

En outre, l'assemblage 56 comporte donc une vis 84 présentant une tête de vis 86 en appui contre une première face 90 ou face aval de la bride 52, sensiblement orthogonale à l'axe 6 et faisant face à la face 48 du disque labyrinthe 32. L'assemblage comprend également un écrou 88 monté sur une portion filetée de la vis, cet écrou 88 étant en appui contre une face extérieur de la masse 54 associée, dont une face intérieure est quant à elle en appui contre une seconde face 92 ou face amont de la bride 52, sensiblement orthogonale à l'axe 6 et opposée à la première face 90.

Ainsi, de l'amont vers l'aval, il est prévu un empilement de l'écrou 88, de la masse 54, de la bride 52, et enfin de la tête de vis 86, ces éléments étant de préférence en contact deux à deux.

Comme cela est montré sur les figures 2 à 4, pour éviter de contraindre trop fortement la bride 52 au niveau de chaque sommet radial de passage 80, il est proposé de déporter les contraintes axiales dues au serrage de l'assemblage vis/écrou 56 traversant le passage en question, en pratiquant des évidements judicieusement positionnés.

Effectivement, pour chacun des festons 78, la bride d'équilibrage 52 présente sur sa première face 90 un premier évidement 94 passant par le sommet radial 80 fortement contraint tangentiellement, et s'étendant le long de la zone de jonction 74, ainsi que radialement de part et d'autre de celle-ci. En d'autres termes, l'évidement 94 s'étend à la fois sur l'âme annulaire 64 et la portion percée 66, de sorte que l'on peut alors considérer qu'il débouche dans le feston concerné 78. Comme montré sur la figure 3, le premier évidement 94 étant dépourvu de contact avec la tête de vis 86, l'appui de cette dernière sur la bride d'équilibrage 52 se fait donc sur la première face 90 à distance du sommet radial 80 fortement contraint tangentiellement, ce qui permet de n'appliquer quasiment aucune contrainte axiale au niveau de ce même sommet 80. La contrainte axiale appliquée sur la bride 52 et due au serrage de l'assemblage 56 est donc avantageusement déportée radialement dans le second sens 72, au coeur de l'âme annulaire 64 contre laquelle la tête de vis 86 est en appui.

A titre indicatif, l'évidement 94 est de préférence réalisé suffisamment profondément dans le premier sens 70, de manière à recouvrir la totalité du fond incurvé du feston 78. Ainsi, en poursuivant dans ce même premier sens 70, la tête de vis 86 peut retrouver le contact avec le contour du feston 78, contrairement à ce qui est recherché autour de la zone du sommet radial 80.

Pour des raisons de facilité de fabrication et comme cela est le mieux visible sur la figure 4, les premiers évidements 94 sont préférentiellement constitués par une unique rainure circulaire 96 pratiquée sur la première face 90, cette rainure 96, de préférence de section semi-circulaire, étant centrée sur l'axe 6 et suivant la zone de jonction 74 en forme de cercle.

D'une manière analogue qui sera moins détaillée ci-dessous, la bride d'équilibrage 52 présente également sur sa seconde face 92, pour chaque feston 78, un second évidement 98 passant par son sommet radial 80 et s'étendant de part et d'autre de la zone de jonction 74, ce second évidement 98 étant dépourvu de contact avec la masse d'équilibrage 52. Ici encore, la totalité des seconds évidements 98 de la face 92 peut être réalisée par une unique rainure circulaire 99 pratiquée sur cette seconde face 92, cette rainure 99, de préférence de section semi-circulaire, étant centrée sur l'axe 6 et suivant la zone de jonction 74 en forme de cercle. D'une manière générale, il existe une identité entre les premiers évidements 94 et les seconds évidements 98, puisque ceux-ci sont préférentiellement symétriques par rapport à un plan transversal donné.

Comme montré sur la figure 3, chaque second évidement 98 étant dépourvu de contact avec la masse 54, l'appui de cette dernière sur la bride d'équilibrage 52 se fait donc sur la seconde face 92 à distance du sommet radial 80 fortement contraint tangentiellement, ce qui permet de n'appliquer quasiment aucune contrainte axiale au niveau de ce même sommet 80. La contrainte axiale appliquée sur la bride 52 et due au serrage de l'assemblage 56 est donc avantageusement déportée radialement dans le second sens 72, au coeur de l' âme annulaire 64 contre laquelle la tête de vis 86 est en appui.

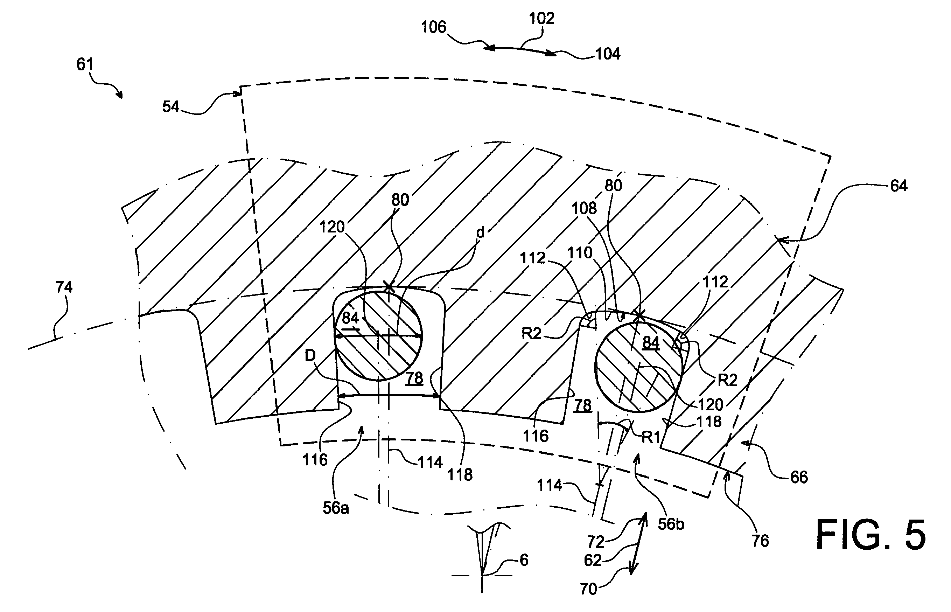

A présent en référence à la figure 5 montrant une autre particularité pouvant être combinée à la réalisation des évidements décrite ci-dessus en référence aux figures 2 à 4, on peut voir que chaque masse 54 (une seule étant représentée schématiquement en pointillés) est montée fixement sur la bride d'équilibrage 52 à l'aide de deux assemblages vis/écrou.

Effectivement, il est prévu un premier assemblage vis/écrou référencé 56a comprenant une première vis 84 traversant un premier passage 78, ainsi qu'un second assemblage vis/écrou référencé 56b comprenant également une seconde vis 84 traversant un second passage 78, décalé du premier passage 78 selon un premier sens 104 de la direction tangentielle 102, ce premier sens 104 opposé à un second sens 106 correspondant donc au sens horaire sur la figure 5.

Comme cela est schématisé pour le second passage 78 prenant la forme d'un feston, tout en étant applicable à l'ensemble des passages traversants 78, il est noté qu'en section transversale de la bride passant par ces passages traversants 78, ou encore dans la vue en coupe transversale de la figure 5, une portion d'extrémité radiale 108 du passage considérée selon le second sens 72 est constituée par un arc de cercle 110 de rayon R1, de part et d'autre duquel se trouvent deux arcs de cercle 112 de rayon R2 inférieur au rayon R1. Plus précisément, l'arc de cercle 110 constitue la majeure partie de cette portion d'extrémité radiale 108, et intègre en son centre le sommet radial 80 précité. D'autre part, le rayon R1 des deux arcs de cercle 112 qui délimitent la portion d'extrémité radiale 108 est sensiblement identique au rayon de la vis 84, ce qui permet éventuellement d'obtenir un contact surfacique entre la vis 84 et l'un de ces deux arcs de cercle 112.

De préférence, le feston 78 présente un axe de symétrie 114 s'étendant radialement, c'est-à-dire selon la direction 62, cet axe de symétrie 114 passant donc par l'axe de disque 6 et le sommet radial 80. Par conséquent, les deux arcs de cercle 112 sont donc symétriques par rapport à l'axe 114, et peuvent chacun faire partie intégrante d'un flanc d'extrémité tangentielle du passage.

A cet égard, chacun des deux passages 78 présente un premier flanc d'extrémité tangentielle 116, de préférence initié au niveau de la jonction entre l'arc de cercle central 110 et l'arc de cercle 112 situé le plus à l'extrémité dans le second sens 106, et qui se poursuit de façon connue par une portion plane sensiblement droite et parallèle à la direction radiale 62 et à l'axe de symétrie 114, jusqu'à l'extrémité radiale libre de bride 76. De manière analogue, chacun des deux passages 78 présente un second flanc d'extrémité tangentielle 118, de préférence initié au niveau de la jonction entre l'arc de cercle central 110 et l'arc de cercle 112 situé le plus à l'extrémité dans le premier sens 104, et qui se poursuit également par une portion plane sensiblement droite et parallèle à la direction radiale 62 et à l'axe de symétrie 114, jusqu'à l'extrémité radiale libre de bride 76.

L'une des particularités de cette configuration réside dans le fait de prévoir chaque vis 84 de diamètre plus faible que la largeur tangentielle du feston 78 qu'elle traverse, de sorte que la portion d'extrémité radiale 108 s'étende sur une distance tangentielle importante permettant de réduire la concentration de contraintes sur et à proximité du sommet radial 80, notamment grâce à sa forme évolutive et adoucie. A ce titre, on prévoit donc qu'une distance tangentielle maximale D entre les deux flancs d'extrémité tangentielle 116, 118, correspondant à la distance constante entre les deux portions planes de ces flancs 116, 118, est supérieure à une longueur tangentielle maximale d de ladite vis 84 sensiblement identique à la valeur du diamètre de celle-ci, le rapport D/d étant compris entre 1,2 et 2, et de préférence proche de 1,5.

De plus, pour assurer le maintien tangentiel de la masse 54 sur la bride d'équilibrage 52, il est tout d'abord prévu que la première vis 84 du premier assemblage 56a soit en appui contre le premier flanc d'extrémité tangentielle 116 du premier passage traversant 78, et plus précisément en appui et contact contre la portion plane de ce flanc 116, à proximité de la jonction avec l'arc de cercle 112 comme montré sur la figure 5. Ainsi, la vis n'est plus au contact de cet arc de cercle 112, ni au contact de l'arc de cercle central 110 intégrant le sommet radial 80. Par ailleurs, en raison du dimensionnement particulier des différents éléments ci-dessus, la première vis 84 se situe donc à distance du second flanc d'extrémité tangentielle 118 duquel elle est décalée tangentiellement selon le second sens 106. Cette disposition permet naturellement de maintenir la masse 54 traversée quasiment sans jeu par la vis 84, dans le second sens 106 par rapport à la bride 52.

De manière analogue, il est aussi prévu que la seconde vis 84 du second assemblage 56b soit en appui contre le second flanc d'extrémité tangentielle 118 du second passage traversant 78, et plus précisément en appui et contact contre la portion plane de ce flanc 118, à proximité de la jonction avec l'arc de cercle 112 comme montré sur la figure 5. Ainsi, la vis n'est plus au contact de cet arc de cercle 112, ni au contact de l'arc de cercle central 110 intégrant le sommet radial 80. Par ailleurs, toujours en raison du dimensionnement particulier des différents éléments ci-dessus, la seconde vis 84 se situe donc à distance du premier flanc d'extrémité tangentielle 116 duquel elle est décalée tangentiellement selon le premier sens 104. Cette disposition permet naturellement de maintenir la masse 54 également traversée quasiment sans jeu par la seconde vis 84, dans le premier sens 104 par rapport à la bride 52.

Enfin, pour traduire le positionnement « excentré » des vis 84 dans leurs passages respectifs, on apercevoir sur la figure 5 qu'un axe de vis 120 de la première vis est décalé tangentiellement dans le second sens 106 par rapport à l'axe de symétrie 114 du premier passage, tandis qu'un axe de vis 120 de la seconde vis 84 est décalé tangentiellement dans le premier sens 104 par rapport à l'axe de symétrie 114 du second passage.

Bien entendu, diverses modifications peuvent être apportées par l'homme du métier à l'invention qui viennent d'être décrite, uniquement à titre d'exemples non limitatifs. A cet égard, il est noté que si les modes de réalisation préférés ont été décrits et représentés avec des passages traversants prenant la forme de festons, ces passages peuvent alternativement être réalisés à l'aide de simples trous à travers la bride d'équilibrage, sans sortir du cadre de l'invention.

## Revendications

1. Système d'équilibrage de rotor de turbomachine (61) comprenant une bride d'équilibrage (52) pourvue d'une âme annulaire (64) délimitée radialement dans un premier sens (70) par une zone de jonction (74) à partir de laquelle s'étend radialement dans ledit premier sens (70) une pluralité de passages traversants (78), vers une extrémité radiale libre de bride (76), chaque passage traversant (78) présentant un sommet radial (80), selon un second sens (72) opposé audit premier sens (70), appartenant à ladite zone de jonction (74), ledit système comprenant en outre une pluralité de masses d'équilibrage (54) montées fixement sur ladite bride d'équilibrage (52) par l'intermédiaire d'au moins un assemblage vis/écrou (56) traversant l'un desdits passages (78), l'un desdits éléments pris parmi l'écrou (88) et la tête de vis (86) étant en appui contre une première face (90) de ladite bride d'équilibrage (52) et ladite masse d'équilibrage (54) étant en appui contre une seconde face (92) de ladite bride d'équilibrage, opposée à la première face (90),
**caractérisé en ce que** pour chacun desdits passages traversants (78), ladite bride d'équilibrage (52) présente sur sa première face (90) un premier évidement (94) passant par ledit sommet radial (80) et s'étendant de part et d'autre de ladite zone de jonction (74), ce premier évidement (94) étant dépourvu de contact avec ledit élément pris parmi l'écrou (88) et la tête de vis (86), ladite bride d'équilibrage (52) présentant sur sa seconde face (92) un second évidement (98) passant par ledit sommet radial (80) et s'étendant de part et d'autre de ladite zone de jonction (74), ce second évidement (98) étant dépourvu de contact avec ladite masse d'équilibrage (54).

2. Système d'équilibrage (61) selon la revendication 1, **caractérisé en ce qu'**en section transversale de la bride passant par lesdits passages traversants (78), ladite zone de jonction (74) prend la forme d'un cercle centré sur un axe de la bride annulaire (6).

3. Système d'équilibrage (61) selon la revendication 2, **caractérisé en ce qu'**en section transversale de la bride passant par lesdits passages traversants (78), ledit sommet radial (80) de chaque passage traversant prend la forme d'un point appartenant audit cercle (74) centré sur l'axe de la bride annulaire (6).

4. Système d'équilibrage (61) selon la revendication 2 ou la revendication 3, **caractérisé en ce que** lesdits premiers évidements (94) sont constitués par une unique rainure circulaire (96) pratiquée sur ladite première face (90), de façon centrée sur l'axe de la bride annulaire (6), et **en ce que** les seconds évidements (98) sont constitués par une unique rainure circulaire (99) pratiquée sur ladite seconde face (92), de façon centrée sur l'axe de la bride annulaire (6).

5. Système d'équilibrage (61) selon l'une quelconque des revendications précédentes, **caractérisé en ce que** chaque masse d'équilibrage (54) est assemblée sur ladite bride d'équilibrage (52) par l'intermédiaire de deux assemblages vis/écrou (56) traversant respectivement deux desdits passages (78), directement consécutifs.

6. Système d'équilibrage (61) selon l'une quelconque des revendications précédentes, **caractérisé en ce que** pour chaque passage traversant (78), ladite tête de vis (86) est en appui contre la première face (90) de ladite bride d'équilibrage (52), et **en ce que** ledit écrou (88) est en appui contre ladite masse d'équilibrage (54).

7. Système d'équilibrage (61) selon l'une quelconque des revendications précédentes, **caractérisé en ce que** chaque passage traversant (78) prend la forme d'un feston ou d'un trou.

8. Disque de rotor de turbomachine comprenant un système d'équilibrage (61) selon l'une quelconque des revendications précédentes, ladite bride d'équilibrage (52) étant portée par un moyeu dudit disque.

9. Module (1) de turbomachine **caractérisé en ce qu'**il comprend au moins un système d'équilibrage (61) selon l'une quelconque des revendications 1 à 7.

10. Module (1) de turbomachine selon la revendication 9, **caractérisé en ce qu'**il est une turbine ou un compresseur de turbomachine.

11. Turbomachine comprenant au moins un module (1) selon la revendication 9 ou la revendication 10.

## Claims

1. A system for balancing a turbine engine rotor (61) comprising a balancing flange (52) provided with an annular core (64) radially delimited in a first direction (70) by a junction area (74) from which extends radially in said first direction (70) a plurality of through-passages (78), towards a free radial flange end (76), each through-passage (78) having a radial apex (80), along a second direction (72) opposite to said first direction (70), belonging to said junction area (74), said system further comprising a plurality of balancing masses (54) fixedly mounted on said balancing flange (52) via at least one screw/nut assembly (56) passing through one of said passages (78), one of said elements taken from the nut (88) and the screw head (86) bearing against a first face (90) of said balancing flange (52) and said balancing mass (54) bearing against a second face (92) of said balancing flange, opposite to the first face (90),
**characterized in that** for each of said through-passages (78), said balancing flange (52) has on its first face (90) a first recess (94) passing through said radial apex (80) and extending on either side of said junction area (74), this first recess (94) being without any contact with said element taken from the nut (88) and the screw head (86), said balancing flange (52) having on its second face (92) a second recess (98) passing through said radial apex (80) and extending on either side of said junction area (74), this second recess (98) being without any contact with said balancing mass (54).

2. The balancing system (61) according to claim 1, **characterized in that** in a cross-section of the flange passing through said through-passages (78), said junction area (74) assumes the shape of a circle centered on an axis of the annular flange (6).

3. The balancing system (61) according to claim 2, **characterized in that** in a cross-section of the flange passing through said through-passages (78), said radial apex (80) of each through-passage assumes the shape of a point belonging to said circle (74) centered on the axis of the annular flange (6).

4. The balancing system (61) according to claim 2 or claim 3, **characterized in that** said first recesses (94) are formed by a single circular groove (96) made on said first face (90), in a centered way on the axis of the annular flange (6), and **in that** the second recesses (98) are formed by a single circular groove (99) made on said second face (92), in a centered way on the axis of the annular flange (6).

5. The balancing system (61) according to any of the preceding claims, **characterized in that** each balancing mass (54) is assembled on said balancing flange (52) via two directly consecutive screw/nut assemblies (56) respectively passing through two of said passages (78).

6. The balancing system (61) according to any of the preceding claims, **characterized in that** for each through-passage (78), said screw head (86) bears against the first space (90) of said balancing flange (52), and **in that** said nut (88) bears against said balancing mass (54).

7. The balancing system (61) according to any of the preceding claims, **characterized in that** each through-passage (78) assumes the shape of a scallop or a hole.

8. A turbine engine rotor disk comprising a balancing system (61) according to any of the preceding claims, said balancing flange (52) being borne by a hub of said disk.

9. A turbine engine module (1) **characterized in that** it comprises at least one balancing system (61) according to any of claims 1 to 7.

10. The turbine engine module (1) according to claim 9, **characterized in that** it is a turbine or a turbine engine compressor.

11. A turbine engine comprising at least one module (1) according to claim 9 or claim 10.

## Patentansprüche

1. Auswucht-System für Turbomaschinen-Rotoren (61), welches einen Auswucht-Flansch (52) umfasst, der mit einem ringförmigen Kern (64) ausgestattet ist, welcher radial in einer ersten Richtung (70) durch einen Verbindungsbereich (74) begrenzt ist, von dem aus sich radial in dieser ersten Richtung (70) eine Mehrzahl von durchgehenden Durchlässen (78) zu einem freien, radialen Flanschende (76) hin erstreckt, wobei jeder durchgehende Durchlass (78) in einer zweiten Richtung (72), die entgegengesetzt zur ersten Richtung (70) ist, eine radiale Spitze (80) aufweist, die zu diesem Verbindungsbereich (74) gehört, wobei das genannte System ferner eine Mehrzahl von Auswuchtmassen (54) umfasst, die fest an diesem Auswucht-Flansch (52) angebracht sind, und zwar mittels mindestens einer Schrauben/Mutter-Anordnung (56), die durch einen der Durchlässe (78) verläuft, wobei eines dieser Elemente, die unter der Mutter (88) und dem Schraubenkopf (86) ausgewählt werden, sich in Anlage an einer ersten Seite (90) dieses Auswucht-Flanschs (52) befindet und die genannte Auswuchtmasse (54) sich in Anlage an einer zweiten Seite (92) dieses Auswucht-Flanschs (52) befindet, die entgegengesetzt zur ersten Seite (90) angeordnet ist,
**dadurch gekennzeichnet,**
**dass** dieser Auswucht-Flansch (52) auf seiner ersten Seite (90) für jeden dieser durchgehenden Durchlässe (78) eine erste Aussparung (94) aufweist, die durch die radiale Spitze (80) verläuft und sich beiderseits des Verbindungsbereichs (74) erstreckt, wobei diese erste Aussparung (94) sich nicht in Kontakt mit diesem Element, das unter der Mutter (88) und dem Schraubenkopf (86) ausgewählt wird, befindet, wobei der Auswucht-Flansch (52) auf seiner zweiten Seite (92) eine zweite Aussparung (98) aufweist, die durch die radiale Spitze (80) verläuft und sich beiderseits des Verbindungsbereichs (74) erstreckt, wobei diese zweite Aussparung (98) sich nicht in Kontakt mit der Auswuchtmasse (54) befindet.

2. Auswucht-System (61) nach Anspruch 1,
**dadurch gekennzeichnet,**
**dass** in dem Querschnitt des Flanschs, der durch die durchgehenden Durchlässe (78) verläuft, der Verbindungsbereich (74) die Form eines auf einer Achse des ringförmigen Flanschs (6) zentrierten Kreises annimmt.

3. Auswucht-System (61) nach Anspruch 2,
**dadurch gekennzeichnet,**
**dass** in dem Querschnitt des Flanschs, der durch die durchgehenden Durchlässe (78) verläuft, die radiale Spitze (80) jedes durchgehenden Durchlasses die Form eines Punkts annimmt, der zu dem auf der Achse des ringförmigen Flanschs (6) zentrierten Kreis gehört.

4. Auswucht-System (61) nach Anspruch 2 oder Anspruch 3,
**dadurch gekennzeichnet,**
**dass** die ersten Aussparungen (94) von einer einzigen kreisförmigen Rille (96) gebildet werden, die in der ersten Seite (90) ausgeführt ist, und zwar auf der Achse des ringförmigen Flanschs (6) zentriert, und dass die zweiten Aussparungen (98) von einer einzigen kreisförmigen Rille (99) gebildet werden, die in der zweiten Seite (92) ausgeführt ist, und zwar auf der Achse des ringförmigen Flanschs (6) zentriert.

5. Answucht-System (61) nach einem der vorherigen Ansprüche,
**dadurch gekennzeichnet,**
**dass** jede Auswuchtmasse (54) an diesem Auswucht-Flansch (52) mittels zweier Schrauben/Mutter-Anordnungen (56) angebracht ist, die durch zwei entsprechende aufeinander folgend angeordnete Durchlässe (78) verlaufen.

6. Auswucht-System (61) nach einem der vorherigen Ansprüche,
**dadurch gekennzeichnet,**
**dass** bei jedem durchgehenden Durchlass (78) der Schraubenkopf (86) in Anlage an der ersten Seite (90) dieses Auswucht-Flanschs (52) ist und dass die Mutter (88) in Anlage an der Auswuchtmasse (54) ist.

7. Auswucht-System (61) nach einem der vorherigen Ansprüche,
**dadurch gekennzeichnet,**
**dass** jeder durchgehende Durchlass (78) die Form eines Bogens oder eines Lochs annimmt.

8. Rotorscheibe für Turbomaschinen, die ein Auswucht-System (61) nach einem der vorherigen Ansprüche aufweist, wobei der genannte Auswucht-Flansch (52) von einer Nabe dieser Scheibe gehalten wird.

9. Modul (1) für Turbomaschinen,
**dadurch gekennzeichnet,**
**dass** es mindestens ein Auswucht-System (61) nach einem der Ansprüche 1 bis 7 aufweist.

10. Modul (1) für Turbomaschinen nach Anspruch 9,
**dadurch gekennzeichnet,**
**dass** es eine Turbine oder ein Verdichter für Turbomaschinen ist.

11. Turbomaschine mit mindestens einem Modul (1) nach Anspruch 9 oder Anspruch 10.
